# EUROPÄISCHE PATENTSCHRIFT

(11) **EP 0 387 532 B1**
(45) Veröffentlichungstag und Bekanntmachung des Hinweises auf die Patenterteilung: **30.11.1994**
(21) Anmeldenummer: 90102789.6
(22) Anmeldetag: 13.02.1990
(51) Int. Cl.: F23R 3/46, F23R 3/30, F23R 3/34, F23R 3/26

(54) **Brennkammer einer Gasturbine**
Gas turbine combustion chamber
Chambre de combustion d'une turbine à gaz

(30) Priorität: 15.03.1989 CH 945/89
(43) Veröffentlichungstag der Anmeldung: 19.09.1990
(73) Patentinhaber: ASEA BROWN BOVERI AG, 5400 Baden (CH)
(72) Erfinder: Keller, Jakob, Dr., CH-5605 Dottikon (CH); Sattelmayer, Thomas, Dr., CH-5318 Mandach (CH)

(56) Entgegenhaltungen:
- EP-A- 0 210 462
- BE-A- 572 173
- FR-A- 944 310
- FR-A- 1 130 091
- GB-A- 914 906
- US-A- 4 058 977

## Beschreibung

### Technisches Gebiet

Die vorliegende Erfindung betrifft eine Brennkammer gemäss Oberbegriff des Anspruchs 1.

### Stand der Technik

Im Hinblick auf die vorgeschriebenen, extrem niedrige NOₓ-Emissionen beim Betrieb einer Gasturbine gehen viele Hersteller dazu über, Vormischbrenner einzusetzen. Einer der Nachteile von Vormischbrennern besteht darin, dass sie bereits bei sehr niedrigen Luftzahlen, je nach Temperatur nach dem Verdichter der Gasturbine bei einer λ von ca. 2, löschen. Aus diesem Grund müssen solche Vormischbrenner im Teillastbetrieb einer Gasturbine von einem oder mehreren Pilotbrennern gestützt werden. In der Regel werden hierfür Diffussionsbrenner eingesetzt. Diese Technik ermöglicht zwar sehr niedrige Noₓ-Emissionen im Bereich der Vollast. Demgegenüber führt dieses Stützbrennersystem bei Teillastbetrieb zu wesentlich höheren NOₓ-Emissionen. Der verschiedentlich bekannt gewordene Versuch, die Diffusions-Stützbrenner magerer zu fahren oder kleinere Stützbrenner zu verwenden, muss daran scheitern, dass sich der Ausbrand verschlechtert und die CO/UHC-Emissionen sehr stark ansteigen. In der Fachsprache ist dieser Zustand unter der Bezeichnung CO/UHC-NOₓ-Schere bekannt geworden.

Aus FR-A-944 310 ist eine Brennkammer bekanntgeworden, welche aus einer Reihe unterschiedlich grossen Brenner, die ringförmig angeordnet sind. Aus dieser Schrift lässt sich ableiten, dass es sich um eine Verbrennung über zwei Stufen handelt, wobei die Brenner in Wechselwirkung Flächen aufheizen zu einer Brennstoffverdunstung. Die Aufteilung der Brennstoffszuführung geschieht so, dass der Brennstoff zur Hauptstufe gelangt, wenn ein Mindestschub überschritten wird. Diese Brenner stehen in Wirkverbindung mit einem anschliessenden Brennraum, in welchem die eigentlichen Aufbereitung der Heissgase stattfindet. Der Brennraum selbst ist integral belocht. Durch diese Oeffnungen tritt eine Luftmenge in den Brennraum ein, wobei die von den Oeffnungen indizierten Luftstrahlen eine Flammenstabilisierung erzeugen sollen. Diese Flammenstabilisierung ist aber an sich sehr labil, denn bereits kleinste Druckunterschiede aus dem Kompressor können den Gleichgewichtszustand zerstören. Des weiteren können sich Schwierigkeiten bei jedem transienten Bereich ergeben, wo eine Schwankung der Drücke nicht zu umgehen ist. Bricht einmal die Flammenstabilisierung zusammen, so ergibt sich, weil kein abgeschlossener Vormischzustand in der Flammenebene herrscht, Zwangsläufig eine starke, nicht mehr zu beherrschende Zunahme der NOx-Emissionen aus einer solchen Verbrennung.

### Aufgabe der Erfindung

Hier will die Erfindung Abhilfe schaffen. Der Erfindung, wie sie in den Ansprüchen gekennzeichnet ist, liegt die Aufgabe zugrunde, bei einer Brennkammer der eingangs genannten Art die Noₓ-Emissionen zu minimieren.

Dazu wird vorgesehen, jeweils zwischen zwei grossen Vormischbrennern einen kleinen Vormischbrenner vorzusehen, wobei beide Arten von Brennern einen Drall erzeugen, welche den gleichen Drehsinn der Strömung vorgeben.

Die grossen Vormischbrenner, im folgenden Hauptbrenner genannt, stehen zu den kleinen Vormischbrennern, im folgenden Pilotbrenner genannt, bezüglich der dort durchströmten Brennerluft in einem Grössenverhältnis, das fallweise festgelegt wird. Im gesamten Lastbereich der Brennkammer arbeiten die Pilotbrenner als selbstgängige Vormischbrenner, wobei die Luftzahl fast konstant bleibt. Weil nun die Pilotbrenner im ganzen Lastbereich bei idealem Gemisch (Vormischbrenner) gefahren werden können, sind die NOₓ-Emissionen auch bei Teillast sehr gering.

Eine vorteilhafte Ausgestaltung der Erfindung wird dann erzielt, wenn die Hauptbrenner und die Pilotbrenner aus unterschiedlich grossen sogenannten Doppelkegelbrennern bestehen, und wenn diese in eine Ringbrennkammer integriert sind. Weil bei einer solchen Konstellation die umlaufenden Stromlinien in der Ringbrennkammer sehr nahe an die Wirbelzentren der Pilotbrenner herankommen, ist eine Zündung nur mit diesen Pilotbrennern möglich. Beim Hochfahren wird die Brennstoffmenge, die über die Pilotbrenner zugeführt wird, soweit gesteigert bis die Pilotbrenner angesteuert sind, d.h. bis die volle Brennstoffmenge zur Verfügung steht. Die Konfiguration wird so gewählt, dass dieser Punkt der Lastabwurfbedingung der Gasturbine entspricht. Die weitere Leistungssteigerung erfolgt dann über die Hauptbrenner. Bei der Spitzenlast der Anlage sind auch die Hauptbrenner voll angesteuert. Weil die Konfiguration "kleine" heisse Wirbelzentren (Pilotbrenner) zwischen grossen kühleren Wirbelzentren (Hauptbrenner) extrem instabil ist, wird auch bei mager betriebenen Hauptbrennern im Teillastbereich ein sehr guter Ausbrand mit niedrigen CO/UHC-Emissionen erreicht, d.h. die heissen Wirbel der Pilotbrenner dringen sofort in die kalten Wirbel der Hauptbrenner ein.

Vorteilhafte zweckmässige Weiterbildungen der erfindungsgemässen Aufgabenlösung sind in den weiteren abhängigen Ansprüchen gekennzeichnet.

Im folgenden werden anhand der Zeichnung Ausführungsbeispiele der Erfindung näher erläutert. Alle für das unmittelbare Verständnis der Erfindung nicht erforderlichen Elemente sind fortgelassen. In den verschiedenen Figuren sind gleiche Elemente jeweils mit den gleichen Bezugszeichen versehen. Die Strömungsrichtung der Medien ist mit Pfeilen gekennzeichnet.

### Kurze Beschreibung der Figuren

Es zeigt:
- Fig.1a: einen schematischen Schnitt durch eine Ringbrennkammer in der Ebene eines Hauptbrenners,
- Fig.1b: einen weiteren schematischen Schnitt durch eine Ringbrennkammer in der Ebene eines Pilotbrenners,
- Fig.2: einen Doppelkegelbrenner in perspektivischer Darstellung, entsprechend aufgeschnitten,
- Fig.3,4,5: entsprechende Schnitte durch die Ebenen III-III (Fig.3), IV-IV (Fig.4) und V-V (Fig. 5), wobei diese Schnitte nur eine schematische, vereinfachte Darstellung des Doppelkegelbrenners nach Fig.2 sind,
- Fig.6: eine Aufsicht auf die Frontwand, mit schematisch dargestellten Doppelkegelbrennern und
- Fig.7: den Stromlinienverlauf auf die Frontwand projeziert.

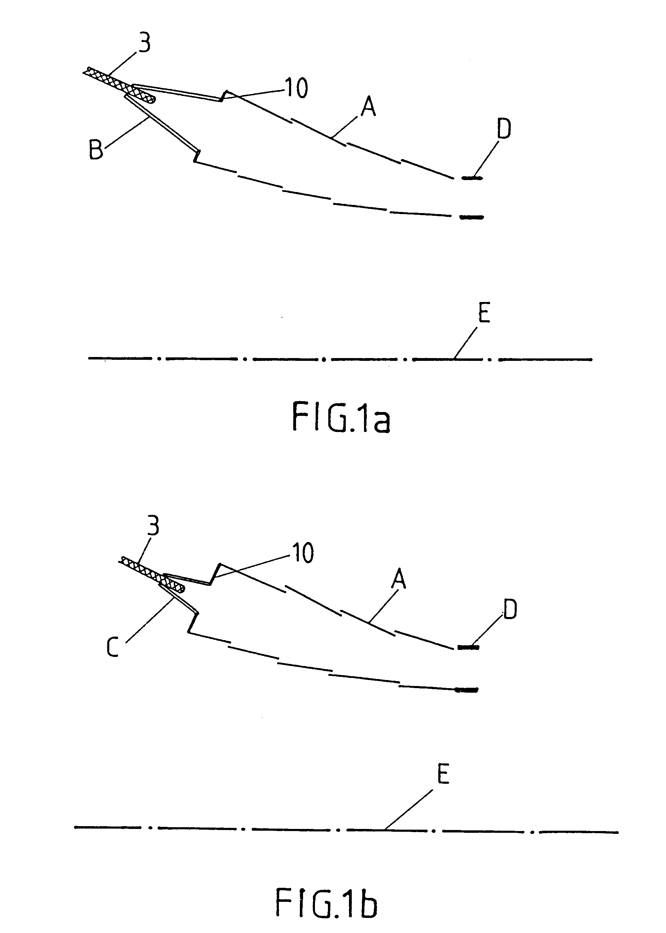

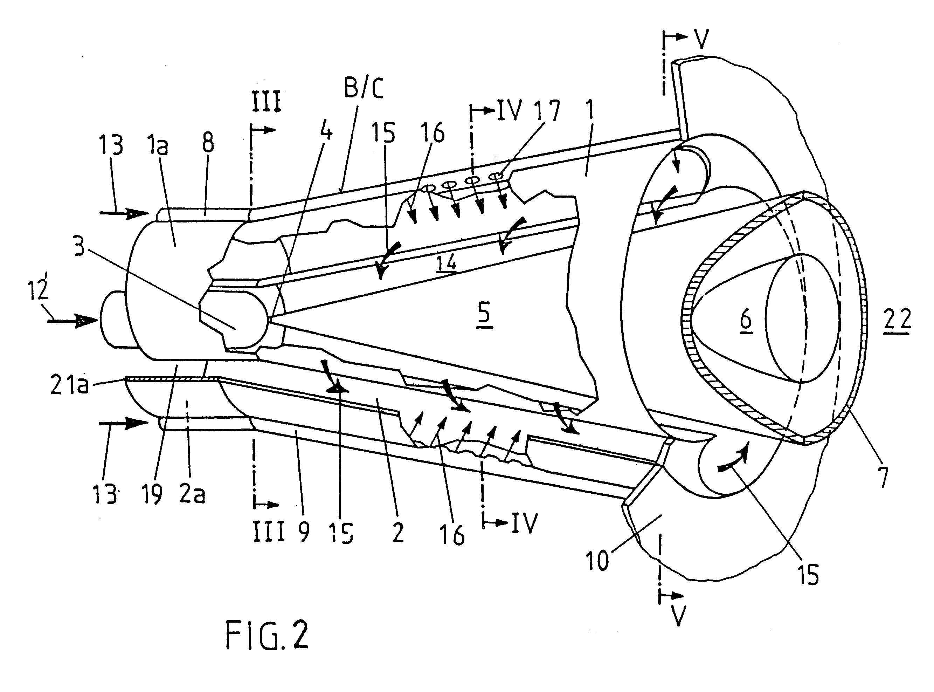

Fig.1a und 1b zeigen einen schematischen Schnitt durch eine Ringbrennkammer A, jeweils in der Ebene eines Pilotbrenners C resp. eines Hauptbrenners B. Die hier dargestellte Ringbrennkammer A verläuft Richtung Turbineneintritt D konisch aus, wie aus der gezeigten Mittelachse E der Ringbrennkammer A hervorgeht. Jedem Brenner B, C ist eine individuelle Düse 3 zugeteilt. Schon aus dieser schematischen Darstellung ist zu erkennen, dass die Brenner B, C zugleich Vormischbrenner sind, also ohne der sonst üblichen Vormischzone auskommen. Freilich müssen diese Vormischbrenner B, C, unabhängig ihrer spezifischen Konzeption, so ausgelegt sein, dass eine Rückzündung in die Vormischzone über die jeweiligen Frontpanel 10 nicht zu befürchten ist. Ein Vormischbrenner, der diese Bedingung vorzüglich erfüllt, wird in den Fig.2 - 5 dargestellt und unten näher erläutert, wobei der Aufbau für beide Brennerarten (Hauptbrenner B/Pilotbrenner C) gleich sein kann, lediglich deren Grösse wird verschieden sein. Bei einer Ringbrennkammer A mittlerer Grösse wird das Grössenverhältnis zwischen Hauptbrenner B und Pilotbrenner C so gewählt, dass etwa 23 % der Brennerluft durch die Pilotbrenner C und etwa 77 % durch die Hauptbrenner B strömen.

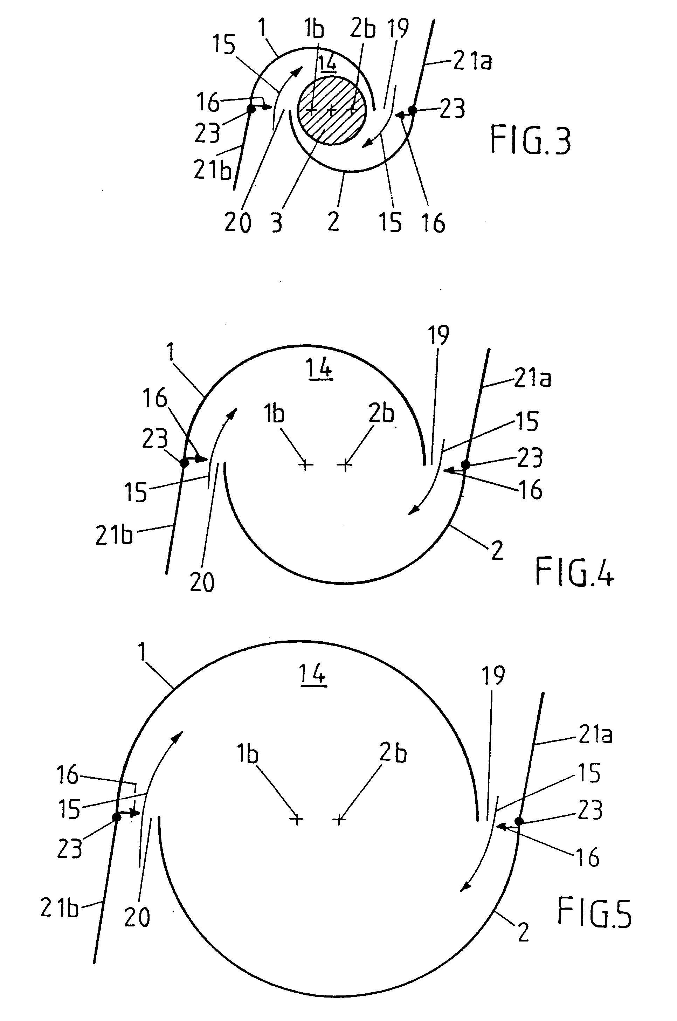

Um den Aufbau des Brenners B/C besser zu verstehen, ist es von Vorteil, wenn gleichzeitig zu Fig.2 die einzelnen Schnitte nach Fig.3 - 5 herangezogen werden. Des weiteren, um Fig.2 nicht unnötig unübersichtlich zu gestalten, sind in ihr die nach Fig.3 - 5 schematisch gezeigten Leitbleche 21a, 21b nur andeutungsweise aufgenommen worden. Im folgenden werden auch bei der Beschreibung von Fig.2 wahlweise, nach Bedarf, auf die restlichen Fig.2 - 4 hingewiesen.

Der Brenner B/C gemäss Fig.2, der vom Aufbau her sowohl Pilotbrenner C als auch Hauptbrenner B sein kann, besteht aus zwei halben hohlen Teilkegelkörpern 1, 2, die versetzt zueinander aufeinander liegen. Die Versetzung der jeweiligen Mittelachse 1b, 2b der Teilkegelkörper 1, 2 zueinander schafft auf beiden Seiten in spiegelbildlicher Anordnung jeweils einen tangentialen Lufteintrittsschlitz 19, 20 frei, (Fig.3 - 5), durch welche die Verbrennungsluft 15 in den Innenraum des Brenners, d.h. in den Kegelhohlraum 14 strömt. Die beiden Teilkegelkörper 1, 2 haben je einen zylindrischen Anfangsteil 1a, 2a,die ebenfalls analog den Teilkegelkörpern 1, 2 versetzt zueinander verlaufen, so dass die tangentialen Lufteintrittsschlitze 19, 20 vom Anfang an vorhanden sind. In diesem zylindrischen Anfangsteil 1a, 2a ist eine Düse 3 untergebracht, deren Brennstoffeindüsung 4 mit dem engsten Querschnitt des durch die zwei Teilkegelkörper 1, 2 gebildeten kegeligen Hohlraumes 14 zusammenfällt. Die Grösse dieser Düse 3 richtet sich nach der Art des Brenners, d.h., ob es sich um einen Pilotbrenner C oder Hauptbrenner B handelt. Selbstverständlich kann der Brenner rein kegelig, also ohne zylindrische Anfangsteile 1a, 2a, ausgeführt sein. Beide Teilkegelkörper 1, 2 weisen je eine Brennstoffleitung 8, 9 auf, die mit Öffnungen 17 versehen sind, durch welche der gasförmige Brennstoff 13, der durch die tangentialen Lufteintrittsschlitze 19, 20 strömenden Verbrennungsluft 15 zugemischt wird. Die Lage dieser Brennstoffleitungen 8, 9 sind am Ende der tangentialen Lufteintrittsschlitze 19, 20 angebracht, so dass dort auch die Zumischung 16 dieses Brennstoffes 13 mit der einströmenden Verbrennungsluft 15 stattfindet. Brennraumseitig 22 weist der Brenner B/C eine Platte auf, welche die Frontwand 10 bildet. Der durch die Düse 3 strömende flüssigen Brennstoff 12 wird in einem spitzen Winkel in den Kegelhohlraum 14 eingedüst, dergestalt, dass sich in der Brenneraustritts ebene ein möglichst homogener kegeliger Brennstoffspray einstellt. Bei der Brennstoffeindüsung 4 kann es sich um eine Luftunterstützte Düse oder um einen Druckzerstäüber handeln. Selbstverständlich kann es sich, bei gewissen Betriebsarten der Brennkammer, auch um einen Dualbrenner mit gasförmiger und flüssiger Brennstoffzuführung, wie dies beispielsweise in EP-A1 210 462 beschrieben wird. Das kegelige Flüssigbrennstoffprofil 5 aus Düse 3 wird von einem tangential einströmenden rotierenden Verbrennungsluftstrom 15 umschlossen. In axialer Richtung wird die Konzentration des flüssigen Brennstoffes 12 fortlaufend durch die eingemischte Verbrennungsluft 15 abgebaut. Wird gasförmiger Brennstoff 13/16 verbrannt, geschieht die Gemischbildung mit der Verbrennungsluft 15 direkt am Ende der Lufteintrittsschlitze 19, 20. Bei der Eindüsung des flüssigen Brennstoffs 12 wird im Bereich des Wirbelaufplatzens, also im Breich der Rückströmzone 6, die optimale, homogene Brennstoffkonzentration über den Querschnitt erreicht. Die Zündung erfolgt an der Spitze der Rückströmzone 6. Erst an dieser Stelle kann eine stabile Flammenfront 7 entstehen. Ein Rückschlag der Flamme ins Innere des Brenners, wie dies bei bekannten Vormischstrecken latent der Fall ist, wogegen dort mit komplizierten Flammenhaltern Abhilfe gesucht wird, ist hier nicht zu befürchten. Ist die Verbrennungsluft 15 vorgeheizt, so stellt sich eine natürliche Verdampfung des flüssigen Brennstoffes 12 ein, bevor der Punkt am Ausgang des Brenners erreicht ist, an dem die Zündung des Gemisches stattfinden kann. Der Grad der Verdampfung ist selbstverständlich von der Grösse des Brenners, der Tropfengrössenverteilungn bei flüssigem Brennstoff und der Temperatur der Verbrennungsluft 15 abhängig. Unabhängig aber davon, ob neben einer homogenen Tropfenmischung durch Verbrennungsluft 15 niedriger Temperatur oder zusätzlich nur eine partielle oder die vollständige Tropfenverdampfung durch vorgeheizte Verbrennungsluft 15 erreicht wird, fallen die Stickoxid- und Kohlenmonoxidemissionen niedrig aus, wenn der Luftüberschuss mindestens 60 % beträgt, womit hier eine zusätzliche Vorkehrung zur Minimierung der NOₓ-Emissionen zur Verfügung steht. Im Falle der vollständigen Verdampfung vor dem Eintritt in die Verbrennungszone sind die Schadstoffemissionswerte am niedrigsten. Gleiches gilt auch für den nahstöchiometrischen Betrieb, wenn die Überschussluft durch rezirkulierendes Abgas ersetzt wird. Bei der Gestaltung der Teilkegelkörper 1, 2 hinsichtlich Kegelneigung und der Breite der tangentialen Lufteintrittsschlitze 19, 20 sind enge Grenzen einzuhalten, damit sich das gewünschte Strömungsfeld der Luft mit ihrer Rückströmzone 6 im Breich der Brennermündung zur Flammenstabilisierung einstellt. Allgemein ist zu sagen, dass eine Verkleinerung der Lufteintrittsschlitze 19, 20 die Rückströmzone 6 weiter stromaufwärts verschiebt, wodurch dann allerdings das Gemisch früher zur Zündung käme. Immerhin ist hier zu festzustellen, dass die einmal geometrisch fixierte Rückströmzone 6 an sich positionsstabil ist, denn die Drallzahl nimmt in Strömungsrichtung im Bereich der Kegelform des Brenners zu. Die Konstruktion des Brenners eignet sich vorzüglich, bei vorgegebener Baulänge des Brenners, die Grösse der tangentialen Lufteintrittsschlitze 19, 20 zu verändern, indem die Teilkegelkörper 1, 2 anhand einer lösbaren Verbindung mit der Abschlussplatte 10 fixiert sind. Durch radiale Verschiebung der beiden Teilkegelkörper 1, 2 zu- oder auseinander verkleinert bzw. vergrössert sich der Abstand der beiden Mittelachsen 1b, 2b, und dementsprechend verändert sich die Spaltgrösse der tangentialen Lufteintrittsschlitze 19, 20, wie dies aus Fig.3 - 5 besonders gut hervorgeht. Selsbtverständlich sind die Teilkegelkörper 1, 2 auch in einer anderen Ebene zueinander verschiebbar, wodurch sogar eine Überlappung derselben angesteuert werden kann. Ja, es ist sogar möglich, die Teilkegelkörper 1, 2 durch eine gegenläufige drehende Bewegung spiralartig einander zu verschieben. Somit hat man es in der Hand, die Form und die Grösse der tangentialen Lufteintritte 19, 20 beliebig zu variieren, womit der Brenner ohne Veränderung seiner Baulänge individuell angepasst werden kann.

Aus Fig. 3 - 5 geht auch die Lage der Leitbleche 21a, 21b hervor. Sie haben Strömungseinleitungsfunktionen, wobei sie, entsprechend ihrer Länge, das jeweilige Ende der Teilkegelkörper 1 und 2 in Anströmungsrichtung der Verbrennungsluft 15 verlängern. Die Kanalisierung der Verbrennungsluft in den Kegelhohlraum 14 kann durch Öffnung bzw. Schliessung der Leitbleche 21a, 21b um den Drehpunkt 23 optimiert werden, insbesondere ist dies dann vonnöten, wenn die ursprüngliche Spaltgrösse der tangentialen Lufteintrittsschlitze 19, 20 verändert wird. Selbstverständlich kann der Brenner auch ohne Leitbleche betrieben werden.

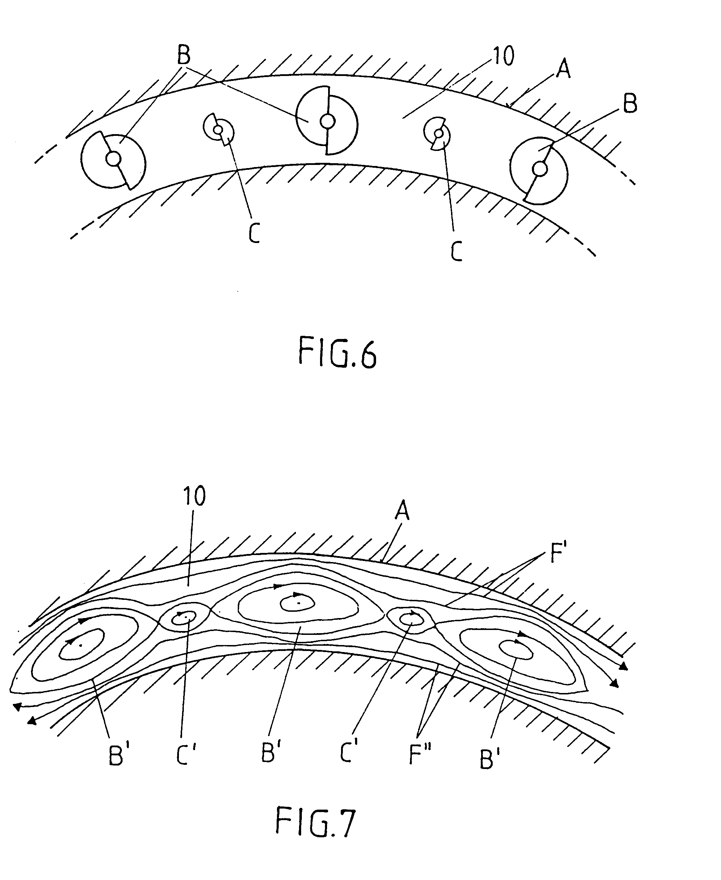

Fig.6 zeigt einen Ausschnitt eines Sektors der Frontwand 10. Daraus geht die Plazierung der einzelnen Hauptbrenner B und Pilotbrenner C hervor. Diese sind auf den Umfang der Ringbrennkammer A gleichmässig und abwechslungsweise verteilt. Der dargestellte Grössenunterschied zwischen Hauptbrennern B und Pilotbrennern C ist nur von qualitativer Natur. Die effektive Grösse der einzelnen Brenner sowie deren Verteilung und Anzahl auf den Umfang der Frontwand 10 der Ringbrennkammer A richtet sich, wie bereits vorne dargelegt, nach der Leistung und Grösse der Brennkammer selbst. Die Hauptbrenner B und Pilotbrenner C, die abwechslungsweise angeordnet sind, münden alle auf gleicher Höhe in eine einheitliche ringförmige Frontwand 10, welche die Eintrittsfläche der Ringbrennkammer A bildet.

Fig.7 zeigt den gleichen Ausschnitt wie Fig.6, jedoch sind hier die einzelnen vom jeweiligen Brenner erzeugten Wirbelzentren dargestellt. Die kleinen heissen Wirbelzentren C′, die von den Pilotbrennern C stammen und die zwischen den grossen kühleren Wirbelzentren B′, die von den Hauptbrennern B stammen, wirken, sind extrem instabil, so dass sie die Tendenz haben, nach Inbetriebnahme sofort in die kühleren Wirbelzentren B′ einzudringen. Dies bewirkt, dass selbst wenn die Hauptbrenner B mager betrieben werden, wie dies im Teillastbetrieb der Fall ist, ein sehr guter Ausbrand mit niedrigen CO/UHC-Emissionen resultiert.

Weil die Hauptbrenner B und Pilotbrenner C gleichläufige Wirbel erzeugen, entsteht oberhalb und unterhalb derselben eine umlaufende, die Brenner B und C umschliessende Strömung, wie dies die Stromlinien F′und F˝ zum Ausdruck bringen. Zur Erklärung dieses Zustandes sei vergleichsweise auf ein endloses Förderband hingewiesen, das durch gleichsinnige Rollen in Bewegung gehalten wird. Die Rolle der Rollen wird hier durch die gleichläufigen Brenner übernommen.

## Patentansprüche

1. Brennkammer einer Gasturbine, welche anströmungsseitig mit einer Anzahl Brenner, die nebeneinander angeordnet und, bezüglich durchströmter Brennerluft unterschiedlich gross sind, wobei zwischen zwei grossen Brennern jeweils einen kleinen Brenner plaziert ist, dadurch gekennzeichnet, dass die Brenner (B, C) drallgleich gerichtet sind, dass jeder Brenner (B, C) aus mindestens zwei aufeinander positionierten, hohlen kegelförmigen Teilkörpern (1, 2) besteht, deren Mittelachsen (1b, 2b) in Längsrichtung der Teilkörper (1, 2) zueinander versetzt verlaufen, wodurch strömungsmässig entgegengesetzt tangentiale Lufteintrittsschlitze (19, 20) für einen Verbrennungsluftstrom (15) entstehen, dass anströmungsseitig im von den Teilkörpern (1, 2) gebildeten kegelhohlförmigen Innenraum (14) mindestens eine Brennstoffdüse (3) plaziert ist, deren Brennstoffeindüsung (4) mittig der zueinander versetzten Mittelachsen (1b, 2b) der Teilkörper (1, 2) liegt.

2. Brennkammer nach Anspruch 1, dadurch gekennzeichnet, dass durch die grossen Brenner (B) 77%, durch die kleinen Brenner (C) 23% der Brennerluft strömt.

3. Brennkammer nach Anspruch 1, dadurch gekennzeichnet, dass die grossen Brenner (B) die Hauptbrenner, die kleinen Brenner (C) die Pilotbrenner der Brennkammer (A) sind.

4. Brennkammer nach Anspruch 1, dadurch gekennzeichnet, dass im Bereich der tangentialen Lufteintrittsschlitze (19, 20) weitere Brennstoffdüsen (16, 17) vorhanden sind.

5. Brennkammer nach einem der Ansprüche 1 bis 4 oder nach den Ansprüchen 1 bis 4, dadurch gekennzeichnet, dass die Brennkammer (A) eine Ringbrennkammer ist, auf deren Umfang anströmungsseitig die grossen Brenner (B) und die kleinen Brenner (C) abwechslungsweise und in einheitlichem Abstand zueinander angeordnet sind, wobei die grossen Brenner (B) und die kleinen Brenner (C) in eine einzige ringförmige Frontwand (10) münden.

## Claims

1. Combustion chamber of a gas turbine, which [lacuna] at the inlet flow end with a number of burners which are arranged next to one another and are of different sizes in terms of the burner air which flows through them, one small burner in each case being placed between two large burners, characterized in that the burners (B, C) are aligned to produce a swirl in the same direction, in that each burner (B, C) comprises at least two hollow, conical partial bodies (1, 2) positioned one upon the other, the centre lines (1b, 2b) of which extend offset to one another in the longitudinal direction of the partial bodies (1, 2), giving rise to tangential air inlet slots (19, 20) with opposite directions of flow for a combustion air flow (15), in that at least one fuel nozzle is placed at the inlet flow end, in the conical hollow internal space (14) formed by the partial bodies (1, 2), the fuel spray inlet (4) of which nozzle lies centrally with respect to the mutually offset centre lines (1b, 2b) of the partial bodies (1, 2).

2. Combustion chamber according to Claim 1, characterized in that 77% of the burner air flows through the large burners (B) and 23% flows through the small burners (C).

3. Combustion chamber according to Claim 1, characterized in that the large burners (B) are the main burners and the small burners (C) are the pilot burners of the combustion chamber (A).

4. Combustion chamber according to Claim 1, characterized in that further fuel nozzles (16, 17) are present in the region of the tangential air inlet slots (19, 20).

5. Combustion chamber according to one of Claims 1 to 4, or according to Claims 1 to 4, characterized in that the combustion chamber (A) is an annular combustion chamber on whose periphery the large burners (B) and the small burners (C) are located alternately and at a uniform distance from one another at the inlet end, the large burners (B) and the small burners (C) entering into a single annular front wall (10).

## Revendications

1. Chambre de combustion d'une turbine à gaz qui, du côté de l'entrée de l'écoulement, est équipée d'un nombre de brûleurs qui sont disposés l'un à côté de l'autre et qui sont de taille différente en ce qui concerne l'air de combustion qui les traverse, dans laquelle un petit brûleur est chaque fois placé entre deux gros brûleurs, caractérisée en ce que les brûleurs (B, C) sont orientés avec le même sens de tourbillon, en ce que chaque brûleur (B, C) se compose d'au moins deux corps partiels coniques creux (1, 2) dont les axes centraux (1b, 2b) sont décalés l'un par rapport à l'autre dans le sens longitudinal des corps partiels (1, 2), ce qui donne naissance à des fentes d'entrée d'air tangentielles (19, 20) opposées par rapport à l'écoulement, pour un courant d'air de combustion (15), en ce que du côté de l'entrée de l'écoulement au moins un gicleur à combustible (3) est placé dans l'espace intérieur conique creux (14) formé par les corps partiels (1, 2), et dont l'injection de combustible (4) est située à mi-distance entre les axes centraux (1b, 2b) décalés l'un par rapport à l'autre, des corps partiels (1, 2).

2. Chambre de combustion suivant la revendication 1, caractérisée en ce que 77 % de l'air de combustion passent par les gros brûleurs (B) et 23 % par les petit brûleurs (C).

3. Chambre de combustion suivant la revendication 1, caractérisée en ce que les gros brûleurs (B) sont les brûleurs principaux et en ce que les petits brûleurs (C) sont les brûleurs pilotes de la chambre de combustion (A).

4. Chambre de combustion suivant la revendication 1, caractérisée en ce que dans la région des fentes d'entrée d'air tangentielles (19, 20) se trouvent d'autres gicleurs à combustible (16, 17).

5. Chambre de combustion suivant l'une des revendications 1 à 4 ou suivant les revendications 1 à 4, caractérisée en ce que la chambre de combustion (A) est une chambre de combustion annulaire, à la périphérie de laquelle, du côté de l'arrivée de l'écoulement, les gros brûleurs (B) et les petits brûleurs (C) sont disposés en alternance et à distance unique les uns des autres, les gros brûleurs (B) et les petits brûleurs (C) débouchant dans une seule paroi frontale annulaire (10).
